# EUROPÄISCHE PATENTSCHRIFT

(11) **EP 3 067 774 B1**
(45) Veröffentlichungstag und Bekanntmachung des Hinweises auf die Patenterteilung: **17.01.2018**
(21) Anmeldenummer: 15162984.7
(22) Anmeldetag: 09.04.2015
(51) Int. Cl.: G06F 1/16, B60K 35/00, B60K 37/06

(54) **BEDIENVORRICHTUNG FÜR EINE BAUMASCHINE**
OPERATING DEVICE FOR A CONSTRUCTION MACHINE
DISPOSITIF DE COMMANDE D'UN ENGIN

(30) Priorität: 13.03.2015 EP 15158953
(43) Veröffentlichungstag der Anmeldung: 14.09.2016
(73) Patentinhaber: Joseph Vögele AG, 67067 Ludwigshafen (DE)
(72) Erfinder: Nessel, Thomas, 67146 Deidesheim (DE)
(74) Vertreter: Grünecker Patent- und Rechtsanwälte PartG mbB

(56) Entgegenhaltungen:
- EP-A1- 1 755 008
- EP-A1- 2 377 995
- DE-A1- 10 308 897
- DE-U1-202012 003 790

## Beschreibung

Die vorliegende Erfindung betrifft eine Bedienvorrichtung für eine Baumaschine, vorzugsweise für einen Straßenfertiger oder einen Beschicker.

Gattungsgemäße Bedienvorrichtungen werden bei herkömmlichen Baumaschinen, insbesondere bei Straßenfertigern oder Beschickern verwendet, um Arbeitsfunktionen zu steuern. Bekannterweise umfassen solche Bedienvorrichtungen eine Vielzahl von Tastern, die dazu konfiguriert sind, eine Vielzahl von Betriebsparametern des Straßenfertigers oder Beschickers einzustellen. Damit ein Bediener die voreingestellten Betriebsparameter nachverfolgen kann, werden diese mittels einer integral in der Bedienvorrichtung ausgebildeten Displayeinheit angezeigt. Dadurch, dass bei bekannten Bedienvorrichtungen die Displayeinheit darin integral verbaut ist, kann der Bediener die mittels der Displayeinheit angezeigten Betriebsparameter nur dann einsehen, wenn er sich in unmittelbarer Nähe zur Bedienvorrichtung aufhält. Eine weitere Einschränkung bei bekannten Bedienvorrichtungen besteht darin, dass die darin integral verbauten Displayeinheiten lediglich zur Anzeige von Betriebsparametern verwendet werden.

Die später im Zusammenhang mit der vorliegenden Erfindung beschriebene Bedienvorrichtung kann für sämtliche Funktionalitäten des WITOS-Systems der Anmelderin, welches im April 2013 auf der BAUMA in München präsentiert wurde, eingesetzt werden. Beispielsweise können mittels der erfindungsgemäßen Bedienvorrichtung folgende Funktionen des WITOS-Systems durchgeführt werden:
- Eingabe von Einbaudaten sowie automatische Korrektur der eingegebenen Einbaudaten,
- Starten des Motors des Straßenfertigers oder Beschickers mittels Fingerscan, Augenscan und/oder Pincode,
- Automatische Dachprofilverstellung auf öffentlichen Straßen, z.B. bei Kreuzungen oder Wendepunkten,
- Automatische Bohleneinstellungen bei Kurvenfahrt,
- Verarbeiten von Daten eines am Straßenfertiger befestigten Temperaturmoduls,
- Überwachen und Einstellen eines Laufkettenabstreifers, und/oder
- Datenempfang von Überwachungseinheiten, beispielsweise Kameras und/oder Sensoren, welche das Umfeld des Straßenfertigers oder Beschickers überwachen.

DE 103 08 897 A1 offenbart ein Kraftfahrzeug mit einer Dockingstation für einen PDA, die in einer Armaturentafel des Kraftfahrzeugs integriert ist. Sofern der PDA in der Dockingstation aufgenommen ist, kann der PDA Kraftfahrzeugfunktionen ansteuern. Für den Fall, dass der PDA aus der Dockingstation herausgenommen ist, können die Fahrzeugfunktionen anstelle mittels des PDAs mittels einer in der Dockingstation ausgebildeten Eingabe-/Ausgabeeinheit angesteuert werden.

Die DE 20 2012 003 790 U1, EP 2 377 995 A1 und EP 1 755 008 A1 offenbaren jeweils Bedienkonsolen eines Straßenfertigers mit darin integral verbauten Displayeinheiten, ohne die Möglichkeit, diese werkzeuglos aus den Bedienkonsolen herauszunehmen.

Die DE 92 04 559 U1 offenbart einen Straßenfertiger mit einem Fernbedienungsgerät, welches zur Fernsteuerung von Antrieben des Straßenfertigers einsetzbar ist.

Aufgabe der Erfindung ist es, eine Bedienvorrichtung für eine Baumaschine zur Verfügung zu stellen, die für den Bediener einen möglichst großen Aktionsradius zulässt, innerhalb dessen der Bediener eine Ansteuerung unterschiedlicher Funktionen der Baumaschine durchführen kann.

Diese Aufgabe wird gelöst mit einer Bedienvorrichtung gemäß dem Anspruch 1. Verbesserte Weiterbildungen der Erfindung sind Gegenstand der Unteransprüche.

Die Erfindung bezieht sich auf eine Bedienvorrichtung für eine Baumaschine, wobei die Bedienvorrichtung eine Vielzahl von Bedienelementen zur Einstellung von Betriebsparametern der Baumaschine sowie eine Displayeinheit umfasst, die dazu konfiguriert ist, technische Daten, insbesondere mindestens einen der eingestellten Betriebsparameter, Bedienungsanleitungen, Serviceanweisungen und/oder momentane Betriebszustände einzelner Funktionseinheiten der Baumaschine anzuzeigen. Ein Bediener kann somit unter anderem die aktuell von ihm eingestellten Betriebsparameter auf der Displayeinheit nachverfolgen. Dies gibt dem Bediener stets einen Überblick darüber, ob entsprechend des Arbeitsvorganges der Baumaschine die Auswahl der Betriebsparameter korrekt getroffen wurde.

Erfindungsgemäß umfasst die Bedienvorrichtung eine Dockingstation, an welcher die Displayeinheit werkzeuglos entnehmbar befestigt ist und die zur Verbindung der Displayeinheit mit min-destens einer Datenleitung und/oder einer Energieversorgung der Baumaschine vorgesehen ist. Anhand der Dockingstation ist es somit möglich, die Displayeinheit fest an die Bedienvorrichtung zu koppeln oder diese, sozusagen als tragbares elektronisches Gerät, aus dieser herauszunehmen. Daher kann der Bediener, wenn er sich in unmittelbarer Nähe zu der Bedienvorrichtung befindet, die Displayeinheit fest mit der Dockingstation verbinden, d.h. diese in der Dockingstation befestigen. Andererseits, wenn sich der Bediener nicht in unmittelbarer Nähe zur Bedienvorrichtung aufhält, kann er die Displayeinheit als tragbares, kabellos betreibbares mobiles Gerät mit sich nehmen, indem er einfach die Displayeinheit aus der Dockingstation herausnimmt. Dabei ist gemeint, dass er zur Herausnahme der Displayeinheit aus der Dockingstation keine zusätzlichen Werkzeuge benötigt, um eine mechanische Kopplung zu lösen. Die Herausnahme bzw. das Abdocken der erfindungsgemäßen Displayeinheit ist nicht als Abmontieren im Sinne von Auseinandernehmen, Auseinanderschrauben oder Zerlegen zu verstehen. Im Gegensatz dazu ist die erfindungsgemäße Displayeinheit nämlich für einen funktionalen Betrieb auch im herausgenommenen bzw. abgedockten Zustand bestimmt. Dagegen ist die Displayeinheit bei bekannten Lösungen nur dann funktionsfähig, wenn die Displayeinheit in der Bedienvorrichtung montiert ist.

Indem die Displayeinheit dem Bediener als tragbares Gerät zur Verfügung gestellt wird, kann er diese bei Beendigung des Arbeitseinsatzes auf der Baustelle aus der Dockingstation herausnehmen und mit nach Hause oder in ein Büro nehmen, während der Straßenfertiger oder Beschicker auf der Baustelle verbleibt. Ein Diebstahl der Displayeinheit kann dadurch vermieden werden. Somit können auch über Nacht unerwünschte Witterungseinflüsse, z.B. Frost, auf die Displayeinheit vermieden werden, so dass es insgesamt zu einer erhöhten Lebensdauer der Displayeinheit kommt.

Bei der Baumaschine handelt es sich vorzugsweise um einen Straßenfertiger, einen Beschicker für einen Straßenfertiger, ein Walzenfahrzeug, einen Bagger, einen Bulldozer, eine Fräse, eine Gesteinszerkleinerungsmaschine, ein Kipperfahrzeug oder eine Zugmaschine, ohne auf diese speziellen Fahrzeugtypen beschränkt zu sein.

Ein besonders raffiniertes Mittel wird dem Bediener dann zur Verfügung gestellt, wenn die Displayeinheit ein Tabletcomputer ist. Dieser kann wegen seines flachen Aufbaus besonders gut in der Dockingstation der Bedienvorrichtung befestigt werden. Außerdem eignet er sich hervorragend als tragbares Gerät, um dem Bediener eine Mitnahme der Displayeinheit zu erleichtern. Insgesamt bietet die Displayeinheit in der Ausführung als Tabletcomputer eine einfache Handhabung für den Bediener.

Gemäß einer weiteren alternativen Ausführungsform ist die Displayeinheit als Smartphone vorgesehen. Obwohl davon auszugehen ist, dass die Displayeinheit als Smartphone einen kleineren Bildschirm aufweist, als wenn sie als Tabletcomputer vorliegen würde, bieten sich bei dieser Ausführungsform insbesondere Vorteile betreffend des Gewichts sowie des Packvolumens der Displayeinheit.

Als Betriebssysteme für die Displayeinheit kommen beispielsweise angepasste Linuxsysteme wie Android vom US-amerikanischen Hersteller Google, QNX, das iOS von Apple, Windows RT/Windows 8 oder auch web-OS des ebenfalls US-amerikanischen Herstellers HP in Frage. Für einen leistungsstarken Einsatz der Displayeinheit eignen sich insbesondere Prozessoren mit ARM-Architektur. Anstelle einer Festplatte kann bei der Displayeinheit ein Flashspeicher als Massenspeicher verwendet werden, wobei als Alternative dazu oder ergänzend mindestens eine Festplatte oder eine SSD-Platte im Umfang der Displayeinheit enthalten sein kann.

Für einen eigenständigen Betrieb der Displayeinheit umfasst diese vorzugsweise mindestens einen eigenen Akku, der automatisch aufladbar ist, wenn die Displayeinheit in der Dockingstation befestigt ist. Dabei ist der Akku der Displayeinheit mit einem festen Netz, sprich der Energieversorgung der Baumaschine verbunden, so dass er solange über das Stromnetz der Baumaschine aufgeladen wird, wie er in der Dockingstation eingesteckt bleibt. Ein separates Ladekabel ist daher nicht notwendig. Allerdings ist es auch möglich, dass die Displayeinheit über eine Schnittstelle verfügt, die zum Anschluss eines externen Ladekabels zur Verfügung steht. Damit kann der Bediener den Akku der Displayeinheit selbst dann aufladen, wenn er die Displayeinheit mit sich von der Baustelle nach Hause oder ins Büro genommen hat.

Eine besonders ergonomische sowie stabile Befestigung der Displayeinheit an der Dockingstation ist dann möglich, wenn die Dockingstation eine Aufnahmemulde ausbildet, in welche die Displayeinheit hineinpasst. Die Dockingstation bildet dann zugleich einen hervorragenden Ablageplatz für die tragbare Displayeinheit, auf welchem die Displayeinheit selbst während einer Einbaufahrt auf unebenem Boden sicher platziert werden kann.

Gemäß einer weiteren vorteilhaften Ausführungsform der Erfindung ist die Displayeinheit selbst in umgedrehter Ausrichtung in der Aufnahmemulde aufnehmbar. Mit umgedrehter Ausrichtung der Displayeinheit ist gemeint, dass eine Bildschirmfläche der Displayeinheit einer Fläche der Aufnahmemulde unmittelbar entgegengerichtet ist und nicht mehr von außerhalb durch den Bediener sichtbar ist. Eine derartige Ausrichtung bietet einen besonderen Schutz für die Bildschirmfläche der Displayeinheit, so dass diese länger funktionsfähig und von Kratzern verschont bleibt. Das Umdrehen der Displayeinheit in die Aufnahmemulde der Dockingstation verhindert auch, dass die Bildschirmfläche durch unerwünschte UV-Strahlung beschädigt wird, und dass unbefugtes Personal die Displayeinheit bedient. Außerdem kann dadurch verhindert werden, dass sich Feuchtigkeit auf der Bildschirmfläche der Displayeinheit niederlässt.

Vorzugsweise ist die Displayeinheit schlüssellos oder mit Hilfe eines Schlüssels verriegelbar an der Dockingstation befestigt. Eine dadurch ausgeführte mechanische Entkopplung der Displayeinheit von der Dockingstation ermöglicht dennoch einen funktionalen Betrieb der Displayeinheit im herausgenommenen Zustand. Eine Herausnahme der Displayeinheit aus der Dockingstation ist somit nur demjenigen erlaubt, der einen dafür vorgesehenen Schlüssel besitzt, um die Verriegelung zwischen der Displayeinheit und der Dockingstation zu lösen. Zur Verriegelung vorgesehene Schlüssel sind dabei nicht zu verwechseln mit Werkzeugen, beispielsweise einem Schraubenzieher, die zum Montieren oder Demontieren bekannter Displays verwendet werden.

Vorteilhaft ist es auch, wenn die Displayeinheit beweglich an der Dockingstation befestigt ist. Bei dieser Variante kann der Bediener die Displayeinheit relativ zur Dockingstation derartig ausrichten, dass sie hinsichtlich seiner Positionierung für ihn günstig einsehbar ist. Außerdem kann der Bediener die Displayeinheit je nach Sonneneinstrahlung derartig ausrichten, dass er die auf der Displayeinheit angezeigten Betriebsparameter gut ablesen kann.

Wahlweise kann die Displayeinheit zusätzlich mit einer Kamera ausgestattet sein. Wenn der Bediener die Displayeinheit aus der Dockingstation herausgenommen hat, kann er diese entsprechend als Kameraeinheit benutzen, um beispielsweise Bilder am Einbauort, insbesondere Bilder eines neu verbauten Straßenbelags, zu machen. Durch diese erweiterte Funktion der Displayeinheit kann vermieden werden, dass der Bediener eine zusätzliche Kamera mit sich führt, um gegebenenfalls Bilder am Einsatzort der Baumaschine zu machen. Die Displayeinheit erfüllt somit zumindest in dieser Hinsicht eine Doppelfunktion.

Hilfsreich ist es auch, wenn die Displayeinheit mindestens eine Schnittstelle für Peripheriegeräte, beispielsweise eine Maus, einen Drucker, einen USB-Port und/oder einen VGA-Port umfasst. Dadurch lässt sich die Displayeinheit problemlos funktional auch mit anderen Geräten verbinden, insbesondere dann, wenn sie aus der Dockingstation herausgenommen ist.

Gemäß einer weiteren vorteilhaften Ausführungsform der Erfindung ist mittels der Displayeinheit eine Vielzahl der Betriebsparameter der Baumaschine einstellbar, wenn die Displayeinheit in der Dockingstation befestigt und/oder aus dieser herausgenommen ist. Die Displayeinheit kann somit vom Bediener als Bedienelement verwendet werden, um die Betriebsparameter an der Baumaschine einzustellen. Insbesondere lassen sich dadurch Betriebsparameter wie z.B. eine Tamperdrehzahl, eine Bohlenheiztemperatur, eine Fördergeschwindigkeit des Materialfördersystems, ein Einbaumodus sowie andere Betriebsparameter einstellen.

Vorzugsweise umfasst die Displayeinheit ein berührungsempfindliches Display, welches zum Einstellen einer Vielzahl von Betriebsparametern der Baumaschine und/oder zum Aufrufen eines Displaymodus eine virtuelle Tastatur zur Verfügung stellt. Das berührungsempfindliche Display kann problemlos mit einem Finger oder einem Stift bedient werden. Alternativ oder zusätzlich kann die Displayeinheit gemäß einer weiteren Ausführungsform eine Sprachsteuerungsfunktion umfassen. Diese ermöglicht es dem Bediener, per Ansage Befehle der Displayeinheit zu erteilen, beispielsweise per Ansage eine Vielzahl von Betriebsparametern der Baumaschine einzustellen. Ebenso ist es vorstellbar, dass mittels der Sprachsteuerungsfunktion eine Vielzahl unterschiedlicher Betriebsmodi aufrufbar sind, welche dem Bediener eine vorbestimmte Anzahl an Betriebsfunktionen zur Verfügung stellen.

Weiterhin ist es möglich, dass die Displayeinheit für eine Ansteuerung von digitalen Geräten, hydraulischen und/oder elektrischen Funktionseinheiten der Baumaschine konfiguriert ist. Die Displayeinheit kann dafür mit einer entsprechenden Software ausgerüstet sein, um eine Auswahl sowie Ansteuerung der jeweiligen Geräte bzw. Funktionseinheiten vorzunehmen. Vorstellbar ist es z.B., dass der Bediener mittels der Displayeinheit eine an der Baumaschine vorgesehene Schichtdickenmessvorrichtung ansteuert, wobei die Messergebnisse vorzugsweise anhand der Displayeinheit dem Bediener in Echtzeit anzeigbar sind. Vorstellbar wäre es auch, dass mittels der Displayeinheit ein Kühlsystem der Baumaschine ansteuerbar ist.

Hat der Bediener die Displayeinheit aus der Dockingstation herausgenommen, kann er eine Fernsteuerung der digitalen Geräte, hydraulischen und/oder elektrischen Funktionseinheiten der Baumaschine mittels Bluetooth-, WLAN- und/oder LTE-Datenfunkverbindung vornehmen. Es spielt daher keine Rolle mehr, ob sich der Bediener zum Einstellen und Ansteuern entsprechender Geräte in unmittelbarer Nähe zur Bedienvorrichtung befindet. Vielmehr ist es ihm gemäß dieser Ausführungsvariante erlaubt, die Displayeinheit mit sich zu tragen und gegebenenfalls Einstellungen sowie Ansteuerungen jeweiliger Geräte vorzunehmen, wenn er sich von der Bedienvorrichtung des Straßenfertigers oder Beschickers entfernt hat. Es versteht sich von selbst, dass sämtliche Steuerungsfunktionen der Displayeinheit, die diese im aus der Dockingstation herausgenommenen Zustand durchführen kann, auch dann mittels der Displayeinheit durchführbar sind, wenn diese an die Dockingstation gekoppelt ist. Ebenso kann die Displayeinheit sowohl im gekoppelten, als auch im aus der Dockingstation herausgenommenen Zustand neben den jeweiligen Steuerungsfunktionen auch Funktionen zum Empfang von Daten umfassen, sodass eine vorzugsweise kontinuierliche Überwachung der Betriebsparameter der Baumaschine möglich ist.

Besonders nützlich für den Bediener ist es, wenn die Displayeinheit, sei es im gekoppelten oder herausgenommenen Zustand aus der Dockingstation, online arbeiten kann, d.h. mit ihr eine Internetverbindung herstellbar ist. Dadurch kann der Bediener über das Internet eine Vielzahl von Bedienungs- und Serviceanleitungen für eine Vielzahl von elektronischen und/oder hydraulischen Maschinensystemen der Baumaschine, insbesondere für die Bohlenanordnung des Straßenfertigers, beziehen und/oder mittels der Displayeinheit direkt von der Baustelle aus technische Infos an den Kunden und/oder an eine Servicezentrale versenden. Insbesondere ist es dadurch auch möglich, mittels der Displayeinheit erfasste Daten, beispielsweise die mittels der darin vorgesehenen Kamera erstellten Bilder, an eine externe Servicezentrale zu versenden. Gegebenenfalls können die erfassten Daten bereits vor Ort mittels einer in der Displayeinheit eigens dafür vorgesehenen Applikation ausgewertet werden. Vorzugsweise kann der Bediener auch Trainingsdemos mittels der Displayeinheit anschauen.

Die Displayeinheit ist vorzugsweise, sei es im gekoppelten oder herausgenommenen Zustand aus der Dockingstation, mit einer Vielzahl von Aufnahmeeinheiten der Baumaschine verbunden, wobei sie dazu konfiguriert ist, Daten von diesen anzuzeigen. Vorstellbar ist, dass die Displayeinheit dabei funktional mit Abstandsmesssystemen, Andocksystemen und/oder Schichtdickenmesssystemen verbunden ist. Vorstellbar ist es auch, dass die Displayeinheit Daten eines Motorüberwachungssystems, eines Reifendrucküberwachungssystems, und/oder einer Thermographievorrichtung zur Überwachung einer Einbauqualität und/oder einer Temperatur des neu verlegten Straßenbelags erfasst und anzeigt.

Eine weitere vorteilhafte Variante besteht darin, dass mittels der Displayeinheit ein aktueller Funktionszustand von Verschleißteilen der Baumaschine abrufbar und anzeigbar ist. Insbesondere kann angezeigt werden, in welchem Zustand sich Heizstäbe einer Bohlenheizvorrichtung des Straßenfertigers befinden. Vorzugsweise gibt die Displayeinheit beim Starten der Baumaschine einen kritischen Funktionszustand von Verschleißteilen der Baumaschine an, sodass der Bediener gleich zu Beginn seiner Arbeit darüber informiert wird, ob gegebenenfalls Verschleißteile der Baumaschine ausgetauscht werden müssen. Insbesondere wäre es auch möglich, dass die Displayeinheit beim Starten der Baumaschine einen Füllstand eines Treibstofftanks für die Antriebseinheit anzeigt.

Vorstellbar wäre es auch, dass die Displayeinheit für einen Datenaustausch mit einer externen Station konfiguriert ist. Die Displayeinheit kann beispielsweise mit einem Satelliten kommunizieren, um basierend auf einem solchen Datenaustausch eine Position der Baumaschine festzustellen, die dem Bediener auf der Displayeinheit anzeigbar ist. Ferner ist es vorstellbar, dass die Displayeinheit mit einem anderen Fahrzeug auf der Baustelle durch Datenaustausch kommuniziert, beispielsweise mit einem Walzenfahrzeug, um von diesem spezifische Arbeitsparameter, beispielsweise ein Walzmaß, mitgeteilt zu bekommen. Diesbezüglich kann der Bediener dann manuell bzw. eine automatische Anpassung bestimmter Betriebsparameter an der Baumaschine vornehmen.

Gemäß einer anderen Variante kann ein Betrieb der Baumaschine nur dann gestartet werden, wenn die Displayeinheit in der Dockingstation funktional befestigt ist. Die Displayeinheit dient dabei als Schlüssel, wobei ein zusätzlicher Zündschlüssel zum Starten des Motors der Baumaschine nicht mehr notwendig ist.

Vor diesem Hintergrund wäre es auch möglich, die Displayeinheit als elektronischen Fahrzeugschein auszubilden, d.h. mit Berechtigungsparametern zu belegen, sodass dem Bediener diesbezüglich eine vorbestimmte Auswahl an Funktionen an der Baumaschine freigeschaltet wird.

Um zu gewährleisten, dass die Baumaschine nur von einer bestimmten Person bedient werden kann, kann die Displayeinheit eine Personenidentifizierungssoftware umfassen, mittels welcher lediglich einem bestimmten Personenkreis eine Inbetriebnahme der Baumaschine ermöglicht wird.

Einen weiteren vorteilhaften Nutzen bietet die Displayeinheit dann, wenn sie über eine Freisprecheinrichtung verfügt. Mittels dieser kann der Bediener beispielsweise mit anderen Arbeitern auf der Baustelle kommunizieren oder auch das Arbeitsergebnis externen Fachkräften mitteilen. Die Displayeinheit erfüllt dabei gewissermaßen die Funktion eines Smartphones, so dass der Bediener sein eigenes Handy oder Smartphone nicht mehr am Einsatzort benötigt.

Insbesondere bei Nachtarbeiten ist es vorteilhaft, wenn die Displayeinheit und/oder die Dockingstation eine Lichteinrichtung umfasst. Dadurch wird es dem Bediener erleichtert, die Displayeinheit mit der Dockingstation zu verbinden.

Vorzugsweise ist die Bedienvorrichtung ein Bedienpult auf einer Bedienplattform eines Straßenfertigers oder Beschickers oder ein Bohlenbedienstand des Straßenfertigers.

Den vorangehenden Erläuterungen entsprechend handelt es sich bei der Bedienvorrichtung der Erfindung um eine Einrichtung einer Baumaschine, vorzugsweise eines Straßenfertigers oder Beschickers. Nichtsdestotrotz ist es vorstellbar, dass die erfindungsgemäße Bedienvorrichtung auch an anderen Fahrzeugen, beispielsweise Land- oder Forstfahrzeugen, bzw. an anderen stationären Anlagen zum Einsatz kommt.

Im Folgenden wird ein vorteilhaftes Ausführungsbeispiel der Erfindung anhand einer Figur näher dargestellt. Im Einzelnen zeigen:
- Fig. 1: eine Bedienvorrichtung gemäß dem Stand der Technik,
- Fig. 2: eine erfindungsgemäße Bedienvorrichtung ohne Displayeinheit in der Dockingstation,
- Fig. 3: eine erfindungsgemäße Bedienvorrichtung mit Displayeinheit in der Dockingstation,
- Fig. 4: ein Bohlenbedienstand mit einer erfindungsgemäßen Bedienvorrichtung,
- Fig. 5: eine Baumaschine, die als Straßenfertiger ausgebildet ist, mit einer erfindungsgemäßen Bedienvorrichtung,
- Fig. 6: eine schematische Darstellung der herausgenommenen Displayeinheit mit Akku, Kamera und Peripherieschnittstelle,
- Fig. 7: eine schematische Darstellung der erfindungsgemäßen Bedienvorrichtung in Verbindung mit anderen Geräten des Straßenfertigers oder Beschickers und
- Fig. 8: eine Baumaschine, die als Beschicker ausgebildet ist, mit einer erfindungsgemäßen Bedienvorrichtung.

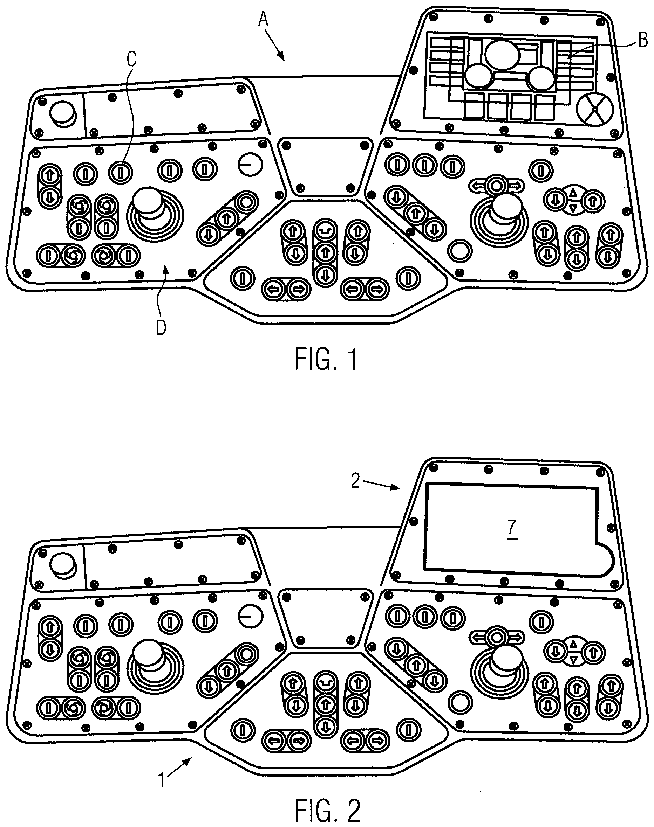

Fig. 1 zeigt eine bekannte Bedienvorrichtung A mit einer darin integral (d.h. fest) eingebauten Displayeinheit B. Die Bedienvorrichtung A umfasst eine Vielzahl von Druckknöpfen C, die jeweiligen Bedienmodulen D der Bedienvorrichtung A zugeordnet sind. Die Displayeinheit B ist fest in der Bedienvorrichtung A verbaut und kann aus dieser zumindest nicht werkzeuglos herausgenommen werden. Eine Bedienung oder Sichtung der Displayeinheit B ist daher nur dann möglich, wenn ein Bediener direkt vor der Bedienvorrichtung A positioniert ist.

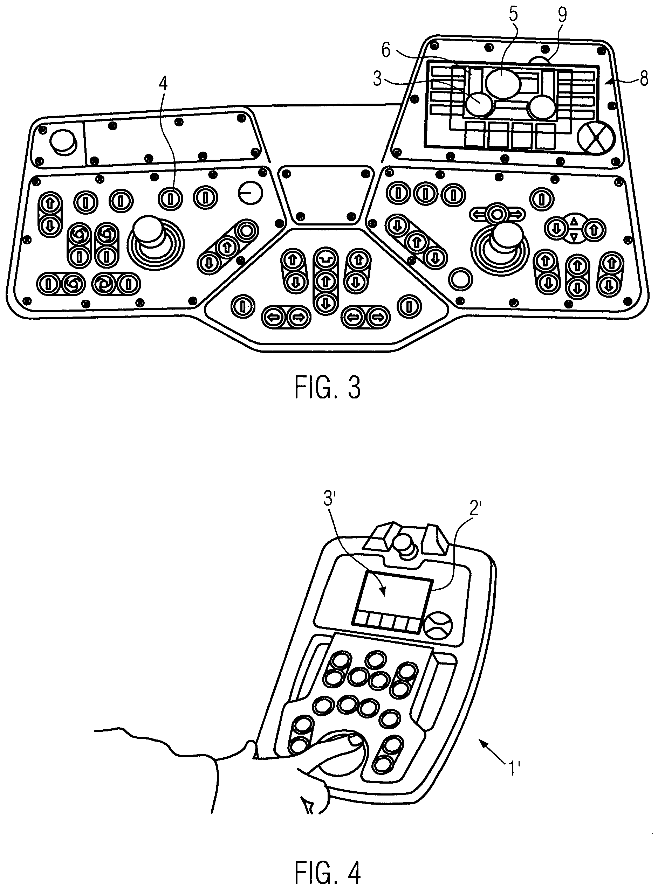

Fig. 2 zeigt eine erfindungsgemäße Bedienvorrichtung 1, die im Gegensatz zur Bedienvorrichtung A aus Fig. 1 eine Dockingstation 2 umfasst. Die Dockingstation 2 dient zur Aufnahme sowie funktionalen Kopplung einer in Fig. 3 gezeigten Displayeinheit 3 mit der Bedienvorrichtung 1. Die Displayeinheit 3 ist ein tragbares elektronisches Gerät, das in der Dockingstation 2 aufnehmbar ist. Sie kann insbesondere als Smartphone oder Tabletcomputer ausgebildet sein.

Fig. 3 zeigt eine Vielzahl von Bedienelementen 4, mittels derer sich Betriebsparameter 5 einstellen lassen, deren Werte oder Einstellungen auf der Displayeinheit 3 zu sehen sind. Die Betriebsparameter 5 zeigen dem Bediener an, in welchem Betriebszustand sich mit der Bedienvorrichtung 1 verbundene Geräte, beispielsweise hydraulische und/oder elektrische Funktionseinheiten, befinden. Ferner umfasst die in der Dockingstation 2 eingesteckte Displayeinheit 3 eine Vielzahl berührungssensitiver Taster 6, die am Rand der Displayeinheit 3 ausgerichtet sind. Die Displayeinheit 3 ist in einer Aufnahmemulde 7 (siehe Fig. 2) der Dockingstation 2 aufgenommen. Die Aufnahmemulde 7 ist derart ausgebildet, dass die Displayeinheit 3 ohne merkbaren Überstand mit einem Rahmenbereich 8 der Bedienvorrichtung 1 abschließt. Ferner zeigt Fig. 3 eine Fingermulde 9, mittels derer das Einsetzen in bzw. die Herausnahme der Displayeinheit 3 aus der Dockingstation 2 erleichtert wird.

Fig. 4 zeigt eine weitere erfindungsgemäße Bedienvorrichtung 1'. Diese ist als Bohlenbedienstand ausgebildet. Auch die Bedienvorrichtung 1' der Fig. 4 verfügt über eine tragbare Displayeinheit 3', welche als eigenständiges tragbares Modul in einer Dockingstation 2' der Bedienvorrichtung 1' befestigt ist.

Die Bedienvorrichtung 1 sowie die Bedienvorrichtung 1' umfassen somit beide als wesentliches erfindungsgemäßes Element eine an- und abdockbare Displayeinheit 3, 3', welche als herausnehmbares Modul dem Bediener zur Verfügung steht.

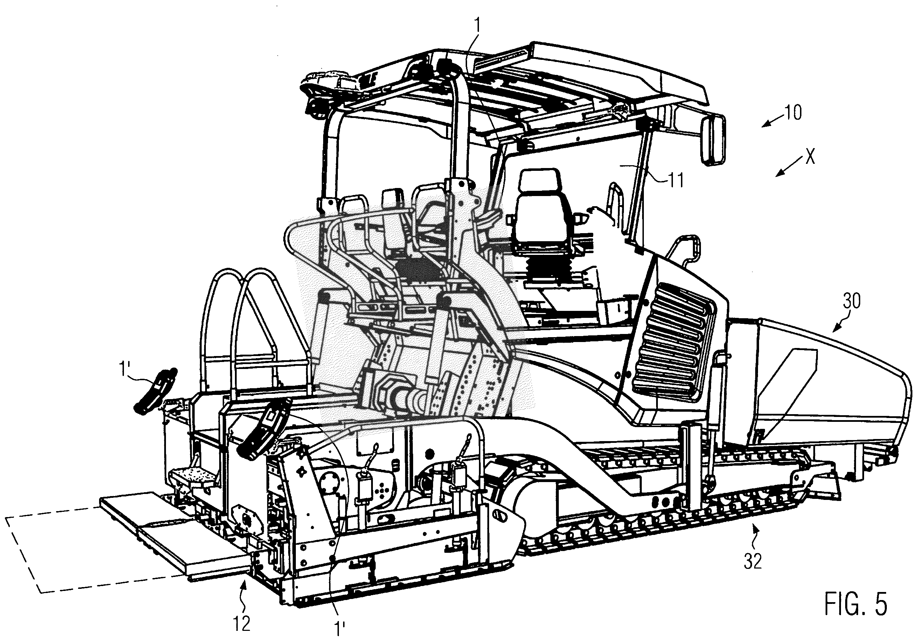

Fig. 5 zeigt eine Baumaschine X, die gemäß dieser Ausführungsform als Straßenfertiger 10 vorliegt, der mit einer Bedienplattform 11 sowie einem Bohlenbedienstand 12 ausgestattet ist. Die Bedienplattform 11 verfügt über die erfindungsgemäße Bedienvorrichtung 1. Am Bohlenbedienstand 12 sind zwei Bedienvorrichtungen 1' vorgesehen. Der Straßenfertiger 10 umfasst einen Gutbunker 30, in welchem Einbaumaterial aufgenommen werden kann. Vom Gutbunker 30 wird das darin aufgenommene Einbaumaterial über eine nicht gezeigte Fördervorrichtung unter der Bedienplattform 11 hindurch zu einer Einbaubohle 31 des Straßenfertigers transportiert. Die Einbaubohle 31 stellt aus dem zur Verfügung gestellten Einbaumaterial einen neuen Straßenbelag her. Gemäß der Figur 5 umfasst der Straßenfertiger 10 weiterhin ein Raupenfahrwerk 32. Mittels der erfindungsgemäßen Bedienvorrichtung 1, 1' können beispielsweise Arbeitsfunktionen an der Einbaubohle 31 eingestellt werden. Ferner ist die erfindungsgemäße Bedienvorrichtung 1,1' vorzugsweise dazu konfiguriert, eine Fahrtgeschwindigkeit am Raupenfahrwerk 32 für den Straßenfertiger 10 einzustellen.

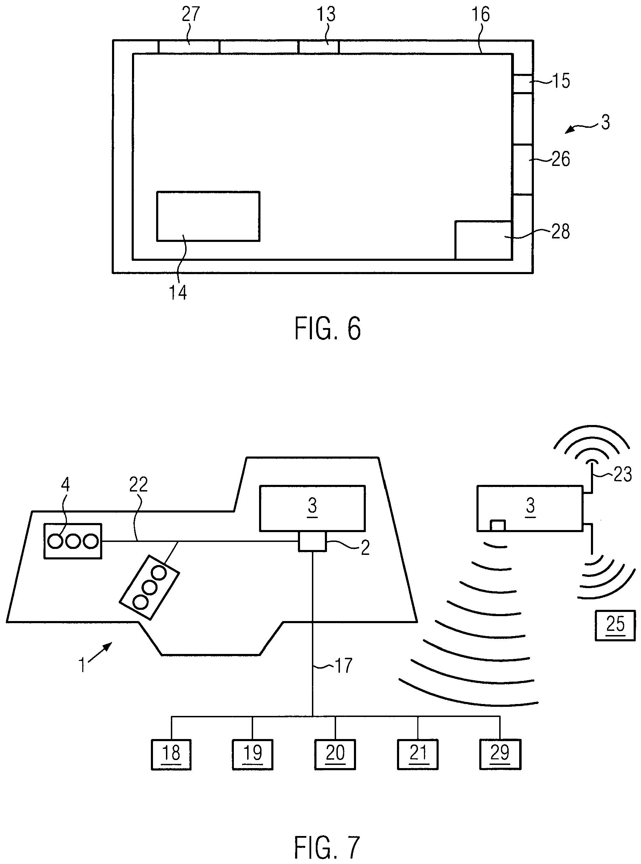

Fig. 6 zeigt die bei der Erfindung verwendete Displayeinheit 3 in schematischer Darstellung. Die Displayeinheit 3 umfasst eine Kamera 13, die zur Aufnahme von digitalen Bildern vorgesehen ist. Der Bediener kann daher die Displayeinheit 3 ebenfalls als Kamera verwenden, um gegebenenfalls das Einbauergebnis festzuhalten. Ferner zeigt Fig. 6, dass die Displayeinheit 3 einen Akku 14 aufweist. Der Akku 14 stellt sicher, dass die Displayeinheit 3 selbst dann eine ausreichende Energieversorgung erhält, wenn sie aus der Dockingstation 2 der Bedienvorrichtung 1, 1' herausgenommen ist. Sämtliche Funktionen der Displayeinheit 3 können daher selbst dann durchgeführt werden, wenn die Displayeinheit 3 aus der Dockingstation 2 entkoppelt ist.

Ebenfalls zeigt Fig. 6 eine Schnittstelle 15 für Peripheriegeräte. Dabei kann es sich um eine USB- oder VGA-Schnittstelle handeln. Die Schnittstelle 15 ermöglicht das Herstellen einer Verbindung zwischen der Displayeinheit 3 und anderen Geräten, insbesondere dann, wenn die Displayeinheit 3 aus der Dockingstation 2 herausgenommen ist. Schließlich zeigt Fig. 6, dass die Displayeinheit 3 ein z.B. berührungssensitives Display 16, eine Freisprecheinrichtung 26 sowie eine Lichteinrichtung 27 aufweist. Wie in der Fig. 3 gezeigt, kann das berührungssensitive Display 16 über eine Vielzahl von berührungssensitiver Tasten 6 verfügen. Schließlich zeigt Figur 6 eine Personenidentifizierungssoftware 28, die beispielsweise mittels Foto oder Fingerabdrucktechnik ermitteln kann, ob der Bediener eine Zulassungsberechtigung für die Bedienvorrichtung 1, 1' hat.

Fig. 7 zeigt die erfindungsgemäße Bedienvorrichtung 1 mit angedockter Displayeinheit 3. Die Displayeinheit 3 ist mit der Dockingstation 2 gekoppelt. Die Displayeinheit 3 ist mittels der Dockingstation 2 sowie einer davon wegführenden, schematisch dargestellten Datenleitung und/oder Energieversorgung 17 mit einer Vielzahl von Geräten des Straßenfertigers 10 funktional verbunden. Bei den Geräten kann es sich beispielsweise um digitale Geräte 18, um hydraulische und elektrische Funktionseinheiten 19, 20, 21 des Straßenfertigers 10 handeln und/oder um Verschleißteile 29.

Ferner zeigt Fig. 7, dass die Displayeinheit 3 über die Dockingstation 2 sowie über eine davon wegführende weitere Datenleitung 22 mit den jeweiligen Bedienelementen 4 der Bedienvorrichtung 1 verbunden ist. Dadurch können Eingaben mittels der Bedienelemente 4 auf der Displayeinheit 3 angezeigt werden.

Die Displayeinheit 3 ist derart konfiguriert, dass zwischen ihr sowie den daran angeschlossenen Geräten sowie Bedienelementen 4 der Bedienvorrichtung 1 eine bidirektionale Kommunikation stattfinden kann.

Schließlich zeigt Fig. 7 ebenfalls in schematischer Darstellung, dass die aus der Dockingstation 2 herausgenommene Displayeinheit 3 auch kabellos mit den jeweiligen Geräten 18, 19, 20, 21 kommunizieren kann. Dieser Weg der Kommunikation ist auch mit den Bedienelementen 4 der Bedienvorrichtung 1 möglich. Ferner zeigt Fig. 7, dass die herausgenommene Displayeinheit 3 über eine in der Displayeinheit 3 ausgebildete Internetschnittstelle 23 online arbeiten kann und mit einer externen Station 25 kommunizieren kann.

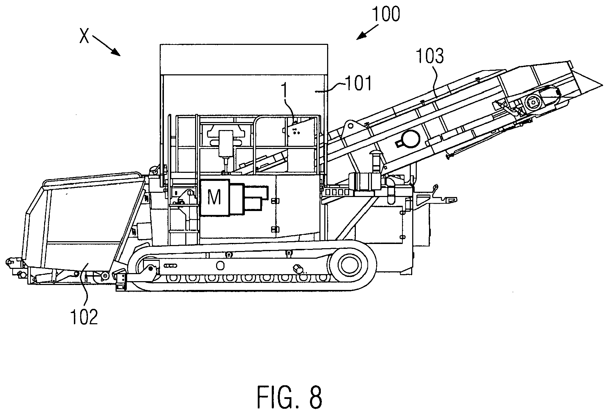

Figur 8 zeigt, dass die Baumaschine X als Beschicker 100 ausgebildet ist, der mit der erfindungsgemäßen Bedienvorrichtung 1 ausgestattet ist, die auf einem Bedienstand 101 des Beschickers 100 vorgesehen ist. Der Beschicker 100 umfasst einen Gutbunker 102, von welchem aus Einbaumaterial über ein Transportförderband 103 einem Straßenfertiger gemäß Figur 5 zur Verfügung gestellt werden kann.

Die erfindungsgemäße Bedienvorrichtung 1, 1' stellt dem Bediener eine multifunktionale Displayeinheit 3, 3' zur Verfügung, mittels derer er unterschiedliche Funktionen an der Baumaschine X durchführen kann. Dabei ist die Displayeinheit 3, 3' nicht nur auf das Anzeigen von Betriebsparametern beschränkt, sondern bietet ein multifunktionales Tool, um gegebenenfalls selbst damit Einstellungen unterschiedlicher Betriebsparameter an der Baumaschine X, insbesondere am Straßenfertiger 10 oder Beschicker 100 vorzunehmen.

## Patentansprüche

1. Bedienvorrichtung (1, 1') für eine Baumaschine (X), umfassend eine Vielzahl von Bedienelementen (4) zur Einstellung von Betriebsparametern (5) der Baumaschine (X) sowie eine Displayeinheit (3), die dazu konfiguriert ist, technische Daten anzuzeigen, wobei
die Bedienvorrichtung (1) eine Dockingstation (2) umfasst, an welcher die Displayeinheit (3) werkzeuglos entnehmbar befestigt ist und die zur Verbindung der Displayeinheit (3) mit mindestens einer Datenleitung und/oder einer Energieversorgung (17) der Baumaschine (X) vorgesehen ist,
**dadurch gekennzeichnet, dass**
die Displayeinheit (3) sowohl im angedockten als auch im abgedockten Zustand für eine Steuerung von digitalen Geräten (18), hydraulischen und/oder elektrischen Funktionseinheiten (19, 20, 21) der Baumaschine (X) konfiguriert ist, und dass die Displayeinheit (3) dazu konfiguriert ist, Daten von einer an der Baumaschine (X) befestigten Aufnahmeeinheit anzuzeigen.

2. Bedienvorrichtung nach Anspruch 1, **dadurch gekennzeichnet, dass** die Displayeinheit (3) ein Tabletcomputer ist.

3. Bedienvorrichtung nach einem der vorangehenden Ansprüche, **dadurch gekennzeichnet, dass** die Displayeinheit (3) einen Akku (14) umfasst, der automatisch aufladbar ist, wenn die Displayeinheit (3) in der Dockingstation (2) befestigt ist.

4. Bedienvorrichtung nach einem der vorangehenden Ansprüche, **dadurch gekennzeichnet, dass** die Dockingstation (2) eine Aufnahmemulde (7) umfasst, in welche die Displayeinheit (3) hineinpasst.

5. Bedienvorrichtung nach Anspruch 4, **dadurch gekennzeichnet, dass** die Displayeinheit (3) umgedreht in der Aufnahmemulde (7) aufnehmbar ist.

6. Bedienvorrichtung nach einem der vorangehenden Ansprüche, **dadurch gekennzeichnet, dass** die Displayeinheit (3) an der Dockingstation (2) verriegelbar befestigt ist.

7. Bedienvorrichtung nach einem der vorangehenden Ansprüche, **dadurch gekennzeichnet, dass** die Displayeinheit (3) beweglich an der Dockingstation (2) befestigt ist.

8. Bedienvorrichtung nach einem der vorangehenden Ansprüche, **dadurch gekennzeichnet, dass** die Displayeinheit (3) eine Kamera (13) und/oder mindestens eine Schnittstelle (15) für Peripheriegeräte umfasst.

9. Bedienvorrichtung nach einem der vorangehenden Ansprüche, **dadurch gekennzeichnet, dass** mittels der Displayeinheit (3) eine Vielzahl der Betriebsparameter (5) einstellbar ist, wenn die Displayeinheit (3) in der Dockingstation (2) befestigt oder aus dieser herausgenommen ist.

10. Bedienvorrichtung nach einem der vorangehenden Ansprüche, **dadurch gekennzeichnet, dass** die Displayeinheit (3) ein berührungsempfindliches Display (16) umfasst.

11. Bedienvorrichtung nach einem der vorangehenden Ansprüche, **dadurch gekennzeichnet, dass** die Displayeinheit (3) dazu fähig ist, online zu arbeiten.

12. Bedienvorrichtung nach einem der vorangehenden Ansprüche, **dadurch gekennzeichnet, dass** ein aktueller Funktionszustand von Verschleißteilen (29) der Baumaschine (X) mittels der Displayeinheit (3) abrufbar und anzeigbar ist.

13. Bedienvorrichtung nach einem der vorangehenden Ansprüche, **dadurch gekennzeichnet, dass** die Displayeinheit (3, 3') für einen Datenaustausch mit einer externen Station (25) und/oder mit anderen Fahrzeugen konfiguriert ist.

14. Bedienvorrichtung nach einem der vorangehenden Ansprüche, **dadurch gekennzeichnet, dass** die Displayeinheit (3) einen Betrieb der Baumaschine (X) zulässt, wenn sie in der Dockingstation (2) befestigt ist.

15. Bedienvorrichtung nach einem der vorangehenden Ansprüche, **dadurch gekennzeichnet, dass** die Displayeinheit (3) eine Personenidentifizierungssoftware (28) und/oder eine Freisprecheinrichtung (26) aufweist.

16. Bedienvorrichtung nach einem der vorangehenden Ansprüche, **dadurch gekennzeichnet, dass** die Bedienvorrichtung (1, 1') ein Bedienpult auf einer Bedienplattform (11) eines Straßenfertigers (10) oder Beschickers (100) oder ein Bohlenbedienstand (12) des Straßenfertigers (10) ist.

17. Bedienvorrichtung nach einem der vorangehenden Ansprüche, **dadurch gekennzeichnet, dass** die Baumaschine (X) ein Straßenfertiger, ein Beschicker, ein Walzenfahrzeug, ein Bagger, ein Bulldozer, eine Fräse, eine Gesteinszerkleinerungsmaschine, ein Kranfahrzeug, ein Kipperfahrzeug oder eine Zugmaschine ist.

18. Straßenfertiger (10), Beschicker (100) für einen Straßenfertiger (10), Walzenfahrzeug, Bagger, Bulldozer, Fräse, Gesteinszerkleinerungsmaschine, Kranfahrzeug, Kipperfahrzeug oder Zugmaschine mit einer Bedienvorrichtung (1, 1') nach einem der Ansprüche 1 bis 16.

## Claims

1. Operating device (1, 1') for a construction machine (X), comprising a plurality of operating elements (4) for adjusting operating parameters (5) of the construction machine (X), and a display unit (3) which is configured to display technical data,
the operating device (1) comprising a docking station (2) at which the display unit (3) is attached so as to be removed without tools and which is provided for connecting the display unit (3) with at least one data line and/or power supply (17) of the construction machine (X),
**characterized in that**
the display unit (3) in a docked or in an undocked state is configured to control digital devices (18), hydraulic and/or electric functional units (19, 20, 21) of the construction machine (X), and
the display unit (3) is configured to display data from a receiving unit fixed to the construction machine (X).

2. Operating device according to claim 1, **characterized in that** the display unit (3) is a tablet computer.

3. Operating device according to one of the preceding claims, **characterized in that the** display unit (3) comprises an accumulator (14) which is automatically chargeable when the display unit (3) is attached in the docking station (2).

4. Operating device according to one of the preceding claims, **characterized in that the** docking station (2) comprises a receiving cavity (7) into which the display unit (3) fits.

5. Operating device according to claim 4, **characterized in that** the display unit (3) may be received in the receiving cavity (7) in a reversed sense.

6. Operating device according to one of the preceding claims, **characterized in that** the display unit (3) is attached to the docking station (2) in a lockable manner.

7. Operating device according to one of the preceding claims, **characterized in that** the display unit (3) is movably attached to the docking station (2).

8. Operating device according to one of the preceding claims, **characterized in that** the display unit (3) comprises a camera (13) and/or at least one interface (15) for peripheral devices.

9. Operating device according to one of the preceding claims, **characterized in that** by means of the display unit (3), a plurality of operating parameters (5) can be adjusted when the display unit (3) is attached in the docking station (2) or taken out of it.

10. Operating device according to one of the preceding claims, **characterized in that** the display unit (3) comprises a touch-sensitive display (16).

11. Operating device according to one of the preceding claims, **characterized in that** the display unit (3) is capable of working online.

12. Operating device according to one of the preceding claims, **characterized in that** a current functional state of wearing parts (29) of the construction machine (X) is retrievable and displayable by means of the display unit (3).

13. Operating device according to one of the preceding claims, **characterized in that** the display unit (3, 3') is configured for data exchange with an external station (25) and/or with other vehicles.

14. Operating device according to one of the preceding claims, **characterized in that** the display unit (3) permits an operation of the construction machine (X) when it is attached in the docking station (2).

15. Operating device according to one of the preceding claims, **characterized in that** the display unit (3) comprises person identification software (28) and/or handsfree equipment (26).

16. Operating device according to one of the preceding claims, **characterized in that** the operating device (1, 1') is a control panel on a control platform (11) of a road finishing machine (10) or a feeder (100) or a screed control stand (12) of the road finishing machine (10).

17. Operating device according to one of the preceding claims, **characterized in that** the construction machine (X) is a road finishing machine, a feeder, a roller vehicle, an excavator, a bulldozer, a milling machine, a rock crushing machine, a crane vehicle, a tip truck or a tractor.

18. Road finishing machine (10), feeder (100) for a road finishing machine (10), roller vehicle, excavator, bulldozer, milling machine, rock crushing machine, crane vehicle, tip truck or tractor with an operating device (1, 1') according to one of claims 1 to 16.

## Revendications

1. Dispositif de commande (1, 1') pour un engin de travaux publics (X), comprenant un grand nombre d'éléments de commande (4) pour régler des paramètres de fonctionnement (5) de l'engin de travaux publics (X), ainsi qu'une unité d'écran de visualisation (3), qui est configurée pour afficher des données techniques, le dispositif de commande (1) comportant une station d'accueil (2) dans laquelle est fixée l'unité d'écran de visualisation (3) de manière à pouvoir en être retirée sans outillage, et qui est prévue pour assurer la liaison de l'unité d'écran de visualisation (3) avec au moins une ligne de transmission de données et/ou une alimentation en énergie (17) de l'engin de travaux publics (X), **caractérisé en ce que**
l'unité d'écran de visualisation (3) est configurée pour assurer une commande d'appareillages numériques (18), d'unités fonctionnelles hydrauliques et/ou électriques (19, 20, 21) de l'engin de travaux publics (X), aussi bien dans l'état arrimé que dans l'état détaché, et **en ce que** l'unité d'écran de visualisation (3) est configurée pour visualiser des données d'une unité d'acquisition fixée à l'engin de travaux publics (X).

2. Dispositif de commande selon la revendication 1, **caractérisé en ce que** l'unité d'écran de visualisation (3) est un ordinateur du type tablette.

3. Dispositif de commande selon l'une des revendications précédentes, **caractérisé en ce que** l'unité d'écran de visualisation (3) comprend une batterie (14), qui peut être chargée automatiquement lorsque l'unité d'écran de visualisation (3) est fixée dans la station d'accueil (2).

4. Dispositif de commande selon l'une des revendications précédentes, **caractérisé en ce que** la station d'accueil (2) comporte une alvéole de réception adaptée à recevoir l'unité d'écran de visualisation (3).

5. Dispositif de commande selon la revendication 4, **caractérisé en ce que** l'unité d'écran de visualisation (3) peut être reçue de manière retournée dans l'alvéole de réception (7).

6. Dispositif de commande selon l'une des revendications précédentes, **caractérisé en ce que** l'unité d'écran de visualisation (3) est fixée de manière verrouillable dans la station d'accueil (2).

7. Dispositif de commande selon l'une des revendications précédentes, **caractérisé en ce que** l'unité d'écran de visualisation (3) est fixée de manière mobile dans la station d'accueil (2).

8. Dispositif de commande selon l'une des revendications précédentes, **caractérisé en ce que** l'unité d'écran de visualisation (3) comporte une caméra (13) et/ou au moins une interface (15) pour des appareils périphériques.

9. Dispositif de commande selon l'une des revendications précédentes, **caractérisé en ce que** l'unité d'écran de visualisation (3) permet le réglage d'un grand nombre des paramètres de fonctionnement (5), lorsque l'unité d'écran de visualisation (3) est fixée dans la station d'accueil (2) ou est retirée de cette dernière.

10. Dispositif de commande selon l'une des revendications précédentes, **caractérisé en ce que** l'unité d'écran de visualisation (3) comporte un écran tactile (16).

11. Dispositif de commande selon l'une des revendications précédentes, **caractérisé en ce que** l'unité d'écran de visualisation (3) est apte à travailler en ligne.

12. Dispositif de commande selon l'une des revendications précédentes, **caractérisé en ce qu'**un état de fonctionnement actuel de pièces d'usure (29) de l'engin de travaux publics (X), peut être appelé et visualisé au moyen de l'unité d'écran de visualisation (3).

13. Dispositif de commande selon l'une des revendications précédentes, **caractérisé en ce que** l'unité d'écran de visualisation (3, 3') est configurée pour un échange de données avec un poste extérieur (25) et/ou avec d'autres véhicules.

14. Dispositif de commande selon l'une des revendications précédentes, **caractérisé en ce que** l'unité d'écran de visualisation (3) autorise un fonctionnement de l'engin de travaux publics (X), lorsqu'elle est fixée dans la station d'accueil (2).

15. Dispositif de commande selon l'une des revendications précédentes, **caractérisé en ce que** l'unité d'écran de visualisation (3) comprend un logiciel d'identification de personne (28) et/ou un système vocal mains libres (26).

16. Dispositif de commande selon l'une des revendications précédentes, **caractérisé en ce que** le dispositif de commande (1, 1') est un pupitre de commande sur une plateforme (11) d'un finisseur de route (10) ou d'un alimentateur (100) ou un poste de commande de table de pose (12) du finisseur de route (10).

17. Dispositif de commande selon l'une des revendications précédentes, **caractérisé en ce que** l'engin de travaux publics (X) est un finisseur de route, un alimentateur, un véhicule à cylindre de compactage, une pelleteuse, un bulldozer, une fraise, un broyeur de pierres, un véhicule-grue, un véhicule à benne basculante ou un véhicule tracteur.

18. Finisseur de route (10), alimentateur (100) pour un finisseur de route (10), véhicule à cylindre de compactage, pelleteuse, bulldozer, fraise, broyeur de pierres, véhicule-grue, véhicule à benne basculante ou véhicule tracteur comprenant un dispositif de commande (1, 1') selon l'une des revendications 1 à 16.
